# FASCICULE DE BREVET EUROPEEN

(11) **EP 3 767 387 B1**
(45) Date de publication et mention de la délivrance du brevet: **30.03.2022**
(21) Numéro de dépôt: 20182777.1
(22) Date de dépôt: 29.06.2020
(51) Int. Cl.: G03B 17/53, A47C 9/06

(54) **INSTALLATION POUR L'ACQUISITION DE DONNEES, NOTAMMENT BIOMETRIQUES, POUR ENFANTS EN BAS AGE**
ANLAGE ZUR DATENERFASSUNG, INSBESONDERE VON BIOMETRISCHEN DATEN, FÜR KLEINKINDER
SYSTEM FOR ACQUIRING DATA, IN PARTICULAR BIOMETRIC DATA, FOR YOUNG CHILDREN

(30) Priorité: 19.07.2019 FR 1908212
(43) Date de publication de la demande: 20.01.2021
(73) Titulaire: Photo-Me Limited, Epsom, Surrey KT19 9AP (GB)
(72) Inventeur: CROLL, Christian, 38640 CLAIX (FR); CRASNIANSKI, Serge, 1204 GENEVE (CH)
(74) Mandataire: Cabinet Laurent & Charras

(56) Documents cités:
- WO-A1-03/085451
- FR-A1- 2 471 164
- FR-A1- 2 943 434
- FR-A1- 3 027 692

## Description

### DOMAINE DE L'INVENTION

La présente invention appartient aux domaines des cabines et autres installations d'acquisition de données, notamment de type biométrique, d'un utilisateur, et plus particulièrement en vue de la réalisation de pièces officielles.

Elle concerne plus spécifiquement une installation pour l'acquisition de telles données pour les enfants en bas âge, typiquement jusqu'à l'âge de six ans, et les bébés, insusceptibles de se tenir seuls en position assise.

### ETAT ANTERIEUR DE LA TECHNIQUE

Les cabines d'acquisition de données biométriques, et plus particulièrement de photos d'identité, en vue de la délivrance de pièces officielles de type permis de conduire, carte d'identité, passeport et autres, sont d'un usage largement répandu. Pour l'essentiel, ces cabines comportent deux parties, respectivement une première partie destinée à accueillir l'utilisateur, séparée par une cloison intégrant notamment les organes acquisition, d'une seconde partie au sein de laquelle sont ménagés les organes de traitement de l'acquisition, de paiement ou prépaiement, et d'impression le cas échéant des données biométriques et plus particulièrement des photos d'identité. Un exemple d'une telle cabine peut se trouver sur les documents FR2943434 ou FR3027692.

Typiquement, l'organe d'acquisition de la photographie du visage de l'utilisateur est constitué d'un appareil photo ou d'une caméra, positionné derrière une fenêtre transparente intégrée dans la cloison séparant la zone d'accueil de la zone technique. Le champ de vision dudit organe d'acquisition est orienté vers l'intérieur de la zone d'accueil. Corollairement, ladite cloison comporte également des organes d'éclairage dudit utilisateur lors de l'acquisition de sa ou de ses photos.

Cette cloison peut également être munie d'organes de paiement ou de prépaiement, ainsi que des moyens d'acquisition, par exemple de l'empreinte digitale dudit utilisateur. Cette zone d'accueil est donc définie par au moins trois parois, respectivement ladite cloison de séparation des zones d'accueil et technique, une paroi latérale perpendiculaire à ladite cloison intercalaire, et une paroi de fond, parallèle à la cloison intercalaire. Cette zone d'accueil est obturée partiellement par une autre paroi, partielle, définissant un espace permettant l'accès de l'individu à l'intérieur de la zone d'accueil, cette paroi pouvant être classiquement remplacée par un simple rideau, dont la fonction, outre de conférer une certaine intimité à l'utilisateur lors de l'acquisition de ses photos, est également d'optimiser l'éclairement de l'utilisateur et par voie de conséquence la qualité de la photo ainsi obtenue.

Ladite zone d'accueil de telles installations comprend classiquement un siège, en général réglable en hauteur, afin de permettre le positionnement du visage de l'utilisateur concerné dans un cadre matérialisé sur un écran positionné sur ladite cloison intercalaire. Une alternative peut consister dans le déplacement vertical de la caméra alors que le siège est fixe.

Si ces installations répondent de manière relativement satisfaisante aux attentes de la plupart des utilisateurs, en revanche, se pose le problème des enfants en bas âge, c'est-à-dire de taille insuffisante pour permettre un cadrage correct de leur visage lors de l'acquisition des photos. On se heurte également à une autre problématique liée aux bébés, c'est-à-dire aux enfants insusceptibles de pouvoir se tenir seuls en position assise, étant rappelé qu'une demande de plus en plus importante se fait jour en relation avec la réalisation des pièces officielles de ces bébés ou enfants en bas âge en raison de la propension des gens à se déplacer de plus en plus souvent, avec le nécessité de disposer de pièces d'identités y compris pour les enfants ou les bébés.

L'objectif recherché par la présente invention réside principalement dans la possibilité de la réalisation d'acquisition de données biométriques et notamment de photos d'identité pour toutes catégories d'utilisateurs, et en outre pour les enfants en bas âge et pour les bébés.

### EXPOSE DE L'INVENTION

A cet effet, l'invention vise une installation pour l'acquisition de données notamment biométriques d'une personne, et plus particulièrement pour les enfants en bas âge et les bébés, comprenant un bâti ouvert au moins au niveau de l'une de ses faces latérales, et comprend des moyens d'acquisition d'une photo du visage de l'utilisateur, outre des moyens d'éclairement de la zone d'accueil de ladite personne, ladite zone d'accueil comportant un siège principal ou siège adulte.

Cette installation se caractérise en ce qu'elle comporte, en outre, un siège additionnel, ce siège comprenant une assise articulée sur une paroi latérale de la zone d'accueil de l'installation, et susceptible d'adopter une position opérationnelle permettant le positionnement de l'enfant sur le siège, et une position escamotée selon laquelle l'assise est rabattue contre ladite paroi latérale, l'assise étant munie d'un pied articulé sur sa face inférieure et destiné à prendre appui sur le siège adulte en position opérationnelle.

En d'autres termes, l'invention propose, en premier lieu, d'associer à une installation d'acquisition de données biométriques et notamment de photos de type traditionnel, un siège escamotable supplémentaire, dénommé ci-après siège enfant, permettant, en raison du lieu de positionnement de l'axe d'articulation dudit siège sur l'une des parois latérales définissant la zone d'accueil de cette installation, et d'autre part d'un piétement susceptible de prendre appui sur le siège traditionnel de ladite installation, de permettre l'acquisition de telles données biométriques notamment de photos d'enfants avec un positionnement correct dudit visage de ce dernier au regard des organes d'acquisition contenus dans ladite installation.

La longueur du piétement articulé à la face inférieure de l'assise et le positionnement de l'axe d'articulation de cette dernière sur la face latérale sont bien évidemment configurés afin que l'assise proprement dite se positionne selon un plan horizontal, afin d'obtenir la stabilité de l'enfant une fois en place sur ladite assise.

Selon une caractéristique avantageuse de l'invention, l'assise en question comporte en outre au moins une paroi latérale articulée le long de l'un de ses bords latéraux, là encore comportant deux positions opérationnelles, une en position dépliée, définissant un réceptacle apte à recevoir un bébé allongé, et une en position repliée sur la face supérieure de l'assise. Avantageusement, l'assise comporte deux parois latérales rabattables, s'étendant le long des deux bords latéraux de ladite assise.

Selon une caractéristique de l'invention, l'installation comporte en outre des moyens d'acquisition secondaires du visage de l'utilisateur, et plus particulièrement destinés à l'acquisition du visage du bébé allongé sur ladite assise, ces moyens d'acquisition secondaires étant positionnés au niveau du plafond de l'installation, à l'aplomb vertical de l'assise.

Ces moyens d'acquisition secondaires sont agencés de telle sorte que, lorsqu'ils sont appelés à fonctionner, ils shuntent les moyens d'acquisition principaux situés dans la zone technique de l'installation, derrière la cloison séparant la zone d'accueil de ladite zone technique.

Ces moyens d'acquisition secondaires sont en outre associés à des moyens d'éclairage secondaires, aptes à assurer l'éclairement du bébé lorsque ce dernier est allongé sur l'assise.

Avantageusement, le plafond de l'installation est muni de moyens aptes à attirer le regard du bébé préalablement à l'acquisition de son visage. Ces moyens sont par exemple constitués d'un ensemble de LEDs (diode électroluminescentes) de couleurs variées, et positionnées au voisinage des moyens d'acquisition secondaires. Ils peuvent également être constitués d'un écran de petite dimension, positionné à proximité immédiate de l'axe optique des moyens d'acquisition secondaires, et sur lequel défile par exemple une animation.

Dans le but d'optimiser la qualité de l'acquisition, et donc l'éclairage du visage du bébé lors de l'acquisition, les parois latérales articulées sur l'assise sont munies sur leur face interne d'un revêtement réflecteur de lumière, destiné à minimiser les ombres déportées de la tête du bébé pour offrir une uniformité de l'arrière-plan sur lequel repose ladite tête lors de la capture biométrique.

### BREVE DESCRIPTION DES FIGURES

La manière dont l'invention peut être réalisée, et les avantages qui en découlent, ressortiront mieux de l'exemple de réalisation qui suit, donné à titre indicatif et non limitatif à l'appui des figures annexées.
La figure 1 est une représentation schématique en perspective d'une l'installation conforme à l'invention.
La figure 2 est une vue analogue à la figure 1, selon un angle de vue différent avec l'assise pour enfants en position escamotée.
La figure 3 est une vue analogue à la figure 2, avec l'assise en position partiellement dépliée.
La figure 4 est une vue analogue à la figure 3, avec l'assise en position opérationnelle pour recevoir un enfant.
La figure 5 est une vue analogue à la figure 4, avec l'assise en début de position opérationnelle pour recevoir un bébé.
La figure 6 est une vue analogue à la figure 5, avec l'assise en position complètement opérationnelle pour recevoir un bébé.
La figure 7 est une vue en contre-plongée illustrant le plafond de l'installation et notamment les moyens d'acquisition secondaires.
La figure 8 est une vue schématique plus détaillée des moyens d'acquisition secondaires.
La figure 9 est une vue schématique de détail et en section des moyens d'acquisition secondaires.

### DESCRIPTION DETAILLEE DE L'INVENTION

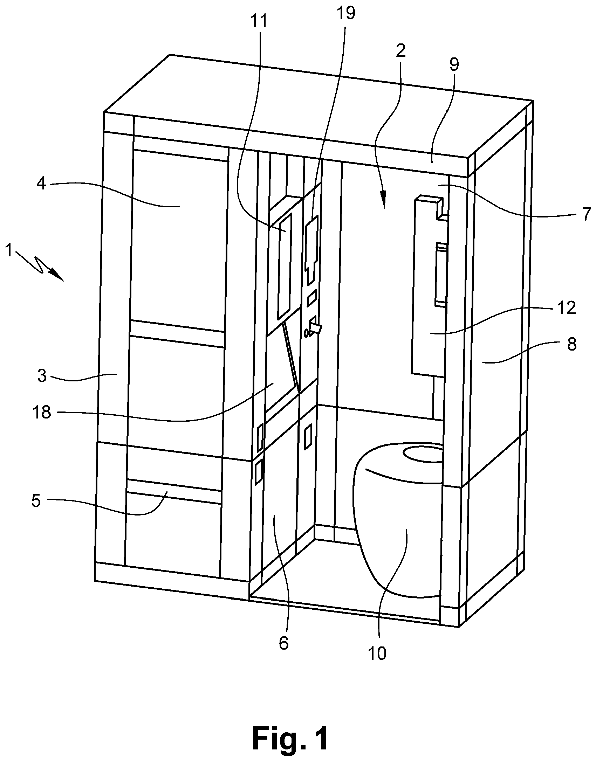

Les figures 1 à 7 représentent donc, de manière extrêmement schématique, une installation d'acquisition de données biométriques et plus particulièrement de photos d'identité d'un utilisateur.

Cette installation (1) comporte une zone d'accueil (2) de l'utilisateur en question, et une zone technique (3) intégrant les différents éléments techniques nécessaires à son fonctionnement, ces deux zones étant séparées par une cloison intermédiaire (6).

La zone d'accueil (2) comporte un siège (10), dénommé ci-après « siège adulte ». Ce siège est destiné à permettre l'assise d'un utilisateur, de telle sorte que lorsqu'il est effectivement assis, il fait face à la cloison intermédiaire. Cette cloison intermédiaire (6) comporte une vitre transparente (11), derrière laquelle sont positionnés des moyens d'acquisition proprement dits (non représentés) du visage de l'utilisateur, et typiquement constitués d'un appareil photo ou d'une caméra. Ladite cloison comporte également un organe de paiement / prépaiement (19), outre un organe interactif (18) permettant à l'utilisateur de suivre et de sélectionner les différentes étapes du processus d'acquisition des données biométriques et notamment de photos.

L'une des faces de la zone technique (3) comprend en outre en écran (4), sur lequel est susceptible de figurer un certain nombre d'informations en relation avec le fonctionnement de l'installation, outre une zone inférieure (5) de réception des clichés une fois ceux-ci réalisés.

Les moyens d'acquisition, dits moyens d'acquisition principaux, et donc par exemple constitués d'un appareil photo ou d'une caméra, sont avantageusement montés sur un système motorisé (non représenté) destiné à ajuster la hauteur desdits moyens d'acquisition au positionnement du visage de l'utilisateur. Ce positionnement intervient de manière automatique ou de manière interactive à l'initiative de l'utilisateur, ce de manière connue.

Selon l'invention, la zone d'accueil (2) est donc définie par au moins trois parois, respectivement la cloison intermédiaire (6), une face latérale (7) et un fond (8), parallèle à la cloison intermédiaire. Cette zone d'accueil est susceptible d'être obturée par un rideau coulissant ou équivalent (non représenté), destiné à permettre, ainsi que déjà dit, outre d'assurer une certaine intimité à l'utilisateur lors de l'acquisition des données biométriques, également d'optimiser l'éclairage de ce dernier lors de l'acquisition des prises de vue.

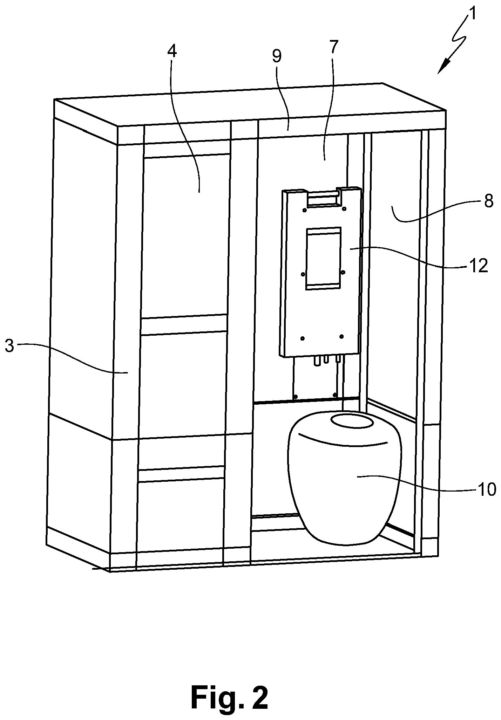

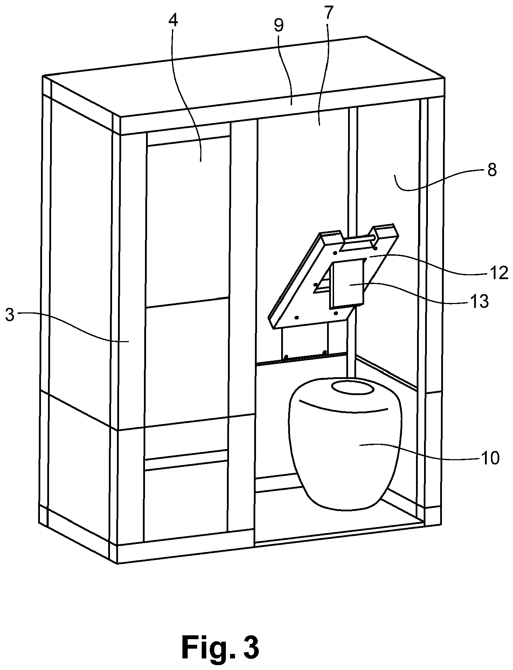

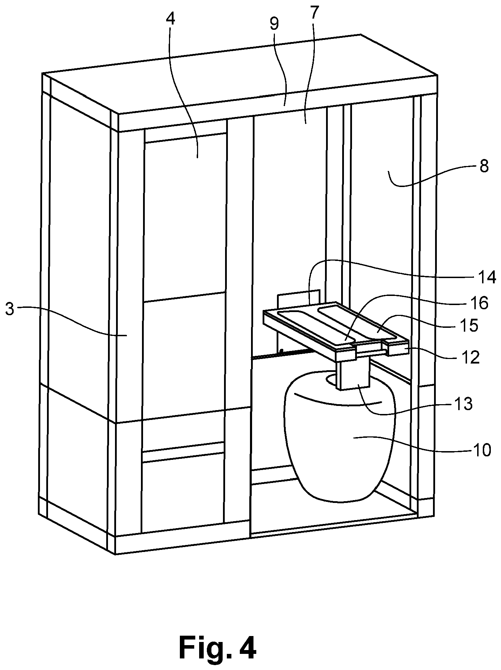

Selon l'invention, la face latérale (7) comprend un siège supplémentaire, ci-après désigné « siège enfant », destiné aux enfants en bas âge, typiquement d'un âge inférieur à six ans, et de manière générale sachant se tenir assis (et d'une taille inférieure à 1,20 mètre, sans que ces données soient limitatives. Ce siège supplémentaire est composé d'une assise (12) articulée sur ladite face latérale (7) selon un axe d'articulation horizontal (14). Cette assise est représentée en position escamotée sur les figures 1 et 2, en position partiellement abaissée sur la figure 3 et en position opérationnelle sur les figures 4 à 7. Cette assise comporte des moyens de rappel (non représentés) tels que, en l'absence de contraintes extérieures, elle se rabat naturellement contre la face latérale (7) comme représenté sur les figures 1 et 2.

Cette assise (12) comporte en outre un piétement (13), lui-même articulé en face inférieure de ladite assise, destiné à prendre appui sur le siège adulte (10), ainsi qu'on peut l'observer notamment sur les figures 4, 5 et 6. Bien évidemment, la hauteur de ce piétement articulé (13) et la hauteur du siège adulte (10) sont déterminées de façon telle que l'assise (12) en position opérationnelle s'étend de manière horizontale, en vue d'optimiser la stabilité de l'enfant une fois assis sur ladite assise. Comme déjà indiqué précédemment, le caractère fixe du siège adulte (10) optimise la robustesse et la stabilité de l'assise.

Au demeurant, le positionnement de l'axe d'articulation (14) de l'assise (12) contre la face latérale (7) est à une hauteur telle que, lorsque l'enfant est positionné sur ladite assise, son visage est situé sensiblement à l'aplomb du cadre de centrage des moyens d'acquisition positionné au sein de la cloison intercalaire (6). En d'autres termes, lorsque l'assise (12) est en position opérationnelle, elle est apte à recevoir un enfant en bas âge, et l'acquisition du visage dudit enfant est réalisé à l'aide des mêmes organes d'acquisition que ceux mis en œuvre pour les adultes, et positionnés dans la zone technique (3).

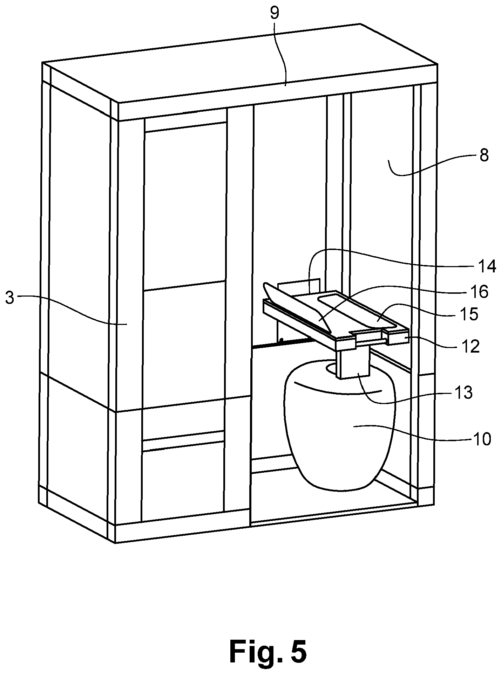

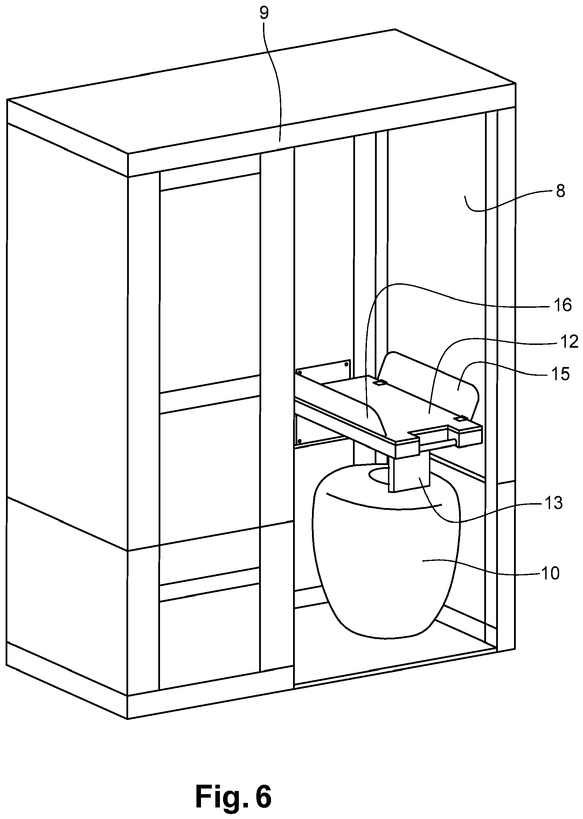

Selon une caractéristique avantageuse de l'invention, ladite assise (12) est munie de parois latérales rabattables (15, 16), s'étendant le long de bords latéraux principaux de l'assise. On a représenté sur la figure 5 une seule (16) de ces parois latérales en position dépliée, et sur la figure 6, les deux parois latérales (15, 16) en position dépliée.

En position dépliée, telle qu'observable sur la figure 6, ces deux parois latérales (15, 16) définissent en coopération avec l'assise (12) en quelque sorte un berceau, apte à recevoir un bébé en position allongée, c'est-à-dire un enfant insusceptible de se positionner de manière stable en position assise.

Avantageusement, la surface supérieure de réception du bébé ainsi définie par l'assise (12) reçoit un revêtement plan, de nature réfléchissante et dépourvu de toute granulométrie, et ce, afin d'offrir une uniformité de l'arrière-plan sur lequel repose ledit bébé lors de la capture biométrique, notamment de son visage par les moyens d'acquisition secondaires décrits ci-après. Cette surface est avantageusement souple et comporte en profondeur une mousse isolante pour le confort du bébé. Elle peut être isolante et localement déformable.

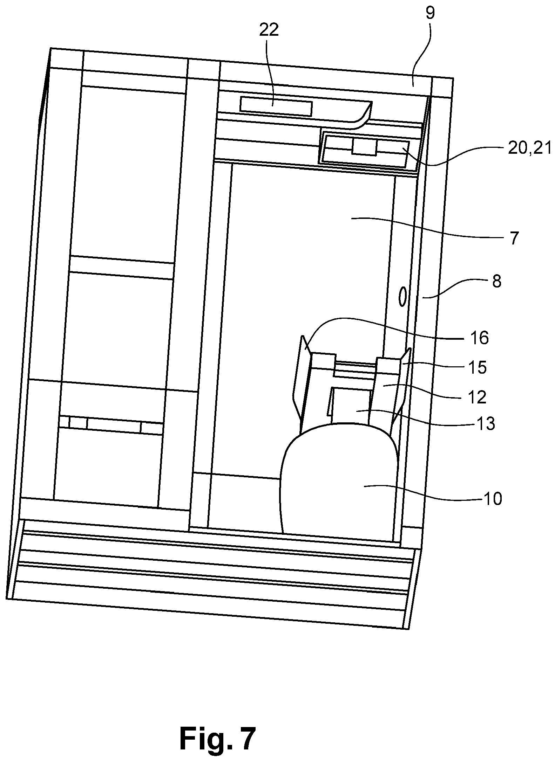

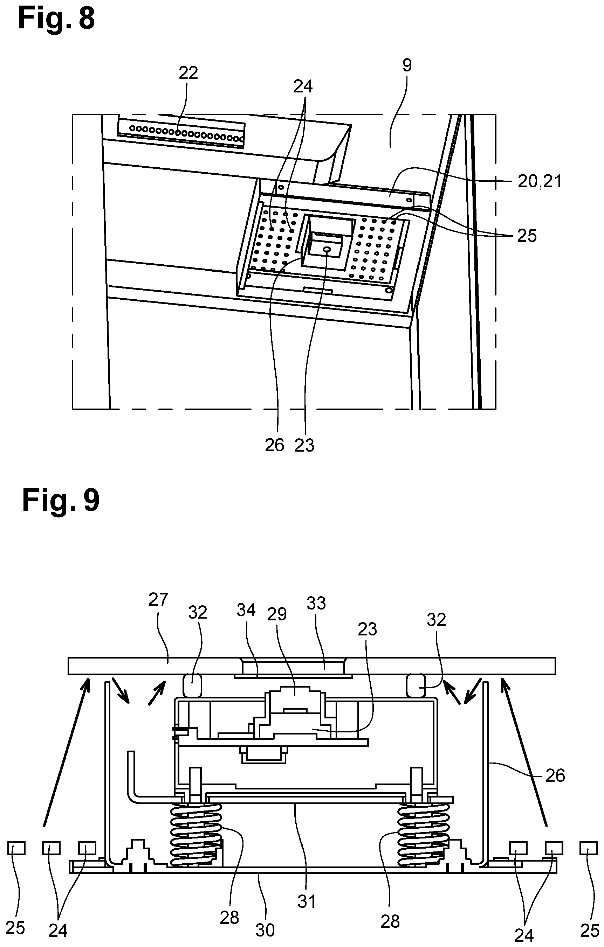

Selon une caractéristique avantageuse de l'invention, afin de permettre l'acquisition du visage d'un bébé, donc en position allongée sur ladite assise (12) avec les parois latérales (15, 16) dépliées, l'installation de l'invention comporte des moyens d'acquisition secondaires (20, 21) plus particulièrement décrits en relation avec les figures 8 et 9. Typiquement, ces moyens d'acquisition secondaires sont positionnés sur la face interne du plafond (9) de l'installation, à l'aplomb de ladite assise, tel qu'on peut bien l'observer notamment sur la figure 7.

Ces moyens d'acquisition secondaires comportent une caméra ou équivalent (23), associée à une optique (29), ainsi que des organes d'éclairement (24) plus particulièrement décrits en relation avec la figure 9.

En l'espèce, ces organes d'éclairement sont constitués de rangées concentriques de LEDs, (24) fonctionnant éventuellement en mode flash. L'indice de couleur de ces LEDs est élevé avec un CRI (acronyme anglo-saxon pour « *color rendering index* » ou indice de rendu de couleur) supérieur à 85, dans l'objectif d'obtenir un meilleur rendu de la colorimétrie du visage. Le spectre des LEDs est de 4000K, mais peut également varier entre 3000K et 7000K, dans la mesure où le spectre présente une distribution plane dans le visible.

Avantageusement, ces organes d'éclairement secondaires sont associés à des moyens aptes à attirer l'attention du bébé juste avant l'acquisition proprement dite de son visage. Typiquement, ces moyens sont constitués également de LEDs colorées (25), par exemple rouge vert bleu, fonctionnant en mode clignotement juste avant l'acquisition proprement dite du visage du bébé.

Avantageusement, la commande de ces LEDs colorées (25) est telle qu'elles font apparaitre un motif de forme géométrique variable dans le temps et dans l'espace, tel que par exemple des rectangles concentriques formant un effet de vague variant en couleur. Ce mode de fonctionnement a pour objet d'attirer entièrement le regard du bébé. Cette commande est synchronisée avec la caméra (23) de telle manière que pendant la trame vidéo d'acquisition biométrique de ladite caméra, notamment en haute résolution qui dure moins de 100ms, l'ensemble des LEDs colorées (25) est éteint afin de ne pas affecter le rendu colorimétrique du visage du bébé. La variabilité dans le temps est assurée par une commande de type PWM (selon l'acronyme anglo-saxon « *Pulse Width Modulation »).*

Dans cette configuration, c'est-à-dire dans le cadre de l'acquisition biométrique du visage du bébé, l'écran (18) ainsi que tous les autres éclairages secondaires sont éteints, quelques secondes avant l'acquisition afin de ne pas attirer le regard du bébé, et ainsi perturber la bonne acquisition.

Avantageusement, la pulsation des éclairages est synchronisée précisément avec le rythme d'une mélodie générée par un ou plusieurs haut-parleurs (non représentés) intégrés au sein de l'installation, et ce, afin d'accentuer l'attirance du regard du bébé.

Plus précisément, les moyens d'acquisition secondaire sont intégrés dans un boitier (26), solidarisé par sa base (30) au plafond (9) précité. La caméra (23) associée à l'optique (29) est montée sur une plateforme intermédiaire (31), elle-même solidarisée à la base (30) par des organes de réglage de l'axe optique (28). Ces organes sont destinés à permettre de centrer l'axe optique de la caméra (23) sur le lieu de positionnement de la tête du bébé sur l'assise (12). Ce réglage intervient lors de la réalisation de l'installation.

L'ensemble caméra et optique est surmonté d'une surface (27) apte à diffuser la lumière générée par les LEDs (24) afin de rendre plus homogène l'éclairage. Cependant, afin de ne pas polluer les signaux acquis par la caméra (23), une mousse (32), du type mousse pour chambre noire, est positionnée entre la périphérie dudit ensemble et la surface diffusante (27).

La surface diffusante (27) est percée à l'aplomb de l'optique (29), et donc de la caméra (23), d'une ouverture traversante (33), avantageusement de forme tronconique, dont la base, c'est-à-dire le côté le plus proche de l'optique (29), est obturée par une vitre optique (34) à propriétés anti-reflet, assurant également un obstacle à la poussière. La forme particulière de cette ouverture traversante permet également de pas polluer les signaux captés par l'ensemble optique (29) + caméra (23).

Le déclenchement des moyens d'acquisition secondaires et des organes d'éclairement secondaires est consécutif à l'interaction par la personne accompagnant le bébé avec ladite installation par l'écran (18) positionné au sein de la cloison intercalaire (6), ou par l'écran (4) positionné sur la face latérale de la zone technique (3). Cet actionnement des moyens d'acquisition secondaires engendre le désactivement des moyens d'acquisition principaux positionnés au sein de la cloison intercalaire. De la même manière, cet activement induit le désactivement des moyens d'éclairage (22) situés par exemple au niveau du plafond de ladite installation (voir figures 7 et 8).

On conçoit tout l'intérêt de l'installation conforme à l'invention en raison de son optimisation de fonctionnement pour les enfants en bas âge et les bébés, en toute sécurité pour ces derniers.

## Revendications

1. Installation pour l'acquisition de données notamment biométriques d'une personne, et plus particulièrement pour les enfants en bas âge et les bébés, comprenant un bâti (6, 7, 8) ouvert au moins au niveau de l'une de ses faces latérales, comprenant des moyens d'acquisition d'une photo du visage de l'utilisateur, outre des moyens d'éclairement de dudit visage, et comportant en outre un siège principal (10), destiné à recevoir de manière connue une personne adulte, ***caractérisée* en ce qu'**elle comporte en outre, un siège additionnel (12), ce siège comprenant une assise articulée sur une paroi latérale (7) du bâti de l'installation, susceptible d'adopter une position opérationnelle permettant le positionnement d'un enfant sur ledit siège additionnel (12), et une position escamotée selon laquelle l'assise est rabattue contre ladite paroi latérale (7), l'assise étant munie d'un pied (13) articulé sur la face inférieure de ladite assise et destiné à prendre appui sur le siège principal (10) en position opérationnelle.

2. Installation pour l'acquisition de données notamment biométriques d'une personne, et plus particulièrement pour les enfants en bas âge et les bébés selon la revendication 1, ***caractérisée* en ce que** la longueur du pied articulé (13) sur la face inférieure de l'assise (12) et le positionnement de l'axe d'articulation (14) de l'assise sur la paroi latérale (7) sont configurés afin que l'assise (12) se positionne selon un plan horizontal, afin d'obtenir la stabilité de l'enfant une fois en place sur ladite assise.

3. Installation pour l'acquisition de données notamment biométriques d'une personne, et plus particulièrement pour les enfants en bas âge et les bébés selon l'une des revendications 1 et 2, ***caractérisée* en ce que** l'assise (12) comporte en outre au moins une paroi latérale (15, 16) articulée le long de l'un des bords latéraux de ladite assise (12), la ou lesdites parois latérales (15, 16) comportant deux positions opérationnelles, une en position dépliée, définissant un réceptacle apte à recevoir un bébé allongé, et une en position repliée sur la face supérieure de l'assise (12).

4. Installation pour l'acquisition de données notamment biométriques d'une personne, et plus particulièrement pour les enfants en bas âge et les bébés selon la revendication 3, ***caractérisée* en ce qu'**elle comporte en outre des moyens d'acquisition secondaires (20, 21, 23, 29) du visage de l'utilisateur lorsque ce dernier est un bébé, allongé sur ladite assise (12), ces moyens d'acquisition secondaires étant positionnés au niveau du plafond (9) de l'installation, à l'aplomb vertical de l'assise.

5. Installation pour l'acquisition de données notamment biométriques d'une personne, et plus particulièrement pour les enfants en bas âge et les bébés selon la revendication 4, ***caractérisée* en ce que** les moyens d'acquisition secondaires (20, 21, 23) sont agencés de telle sorte que, lorsqu'ils sont appelés à fonctionner, ils shuntent les moyens d'acquisition principaux situés en deçà de la cloison intercalaire séparant la zone d'accueil de la zone technique de ladite installation.

6. Installation pour l'acquisition de données notamment biométriques d'une personne, et plus particulièrement pour les enfants en bas âge et les bébés selon l'une des revendications 4 et 5, ***caractérisée* en ce que** les moyens d'acquisition secondaires sont associés à des moyens d'éclairage secondaires (24), aptes à assurer l'éclairement du bébé lorsque ce dernier est allongé sur l'assise (12).

7. Installation pour l'acquisition de données notamment biométriques d'une personne, et plus particulièrement pour les enfants en bas âge et les bébés selon l'une des revendications 5 et 6, ***caractérisée* en ce que** le plafond (9) de l'installation est muni de moyens aptes à attirer le regard du bébé préalablement à l'acquisition de son visage.

8. Installation pour l'acquisition de données notamment biométriques d'une personne, et plus particulièrement pour les enfants en bas âge et les bébés selon la revendication 7, ***caractérisée* en ce que** les moyens d'attraction du regard du bébé sont choisi dans le groupe comprenant une pluralité de LEDs (25) de couleurs variées, positionnées au voisinage des moyens d'acquisition secondaires (20, 21, 23, 29) et fonctionnant en mode clignotement et un écran de petite dimension, positionné à proximité immédiate de l'axe optique des moyens d'acquisition secondaires et sur lequel défile une animation.

9. Installation pour l'acquisition de données notamment biométriques d'une personne, et plus particulièrement pour les enfants en bas âge et les bébés selon l'une des revendications 6 à 8, ***caractérisée* en ce qu'**elle comprend en outre un ou des haut-parleurs aptes à diffuser une mélodie, dont le rythme est synchronisé avec la pulsation des moyens d'éclairage secondaires (24).

10. Installation pour l'acquisition de données notamment biométriques d'une personne, et plus particulièrement pour les enfants en bas âge et les bébés selon l'une des revendication 3 à 9, ***caractérisée* en ce que** la face interne des parois latérales (15, 16) articulées sur l'assise est munie d'un revêtement réflecteur de lumière afin de minimiser les ombres déportées de la tête du bébé pour offrir une uniformité de l'arrière-plan sur lequel repose ledit bébé lors de la capture biométrique,

11. Installation pour l'acquisition de données notamment biométriques d'une personne, et plus particulièrement pour les enfants en bas âge et les bébés selon l'une des revendication 3 à 10, ***caractérisée* en ce que** la surface supérieure de l'assise (12) reçoit un revêtement plan, avantageusement isolant et localement déformable, de nature réfléchissante et dépourvu de toute granulométrie, et ce, afin d'offrir une uniformité de l'arrière-plan sur lequel repose ledit bébé lors de la capture biométrique, notamment de son visage par les moyens d'acquisition secondaires (20, 21, 23,29).

## Patentansprüche

1. Anlage zur Datenerfassung, insbesondere biometrischer Daten einer Person und insbesondere von Kleinkindern und Babys, die einen mindestens auf der Höhe einer seiner Seitenflächen offenen Rahmen (6, 7, 8) umfasst, mit Mitteln zum Erfassen eines Fotos des Gesichts des Benutzers, zusätzlich zu den Mitteln zum Beleuchten des Gesichts und die ferner einen Hauptsitz (10) umfasst, der dazu bestimmt ist, eine erwachsene Person in bekannter Weise aufzunehmen, ***dadurch gekennzeichnet, dass*** sie ferner einen zusätzlichen Sitz (12) umfasst, wobei dieser Sitz eine an einer Seitenwand (7) des Rahmens der Anlage mit Gelenk befestigte Sitzfläche umfasst, die in der Lage ist, eine Betriebsposition einzunehmen, die die Positionierung eines Kindes auf dem zusätzlichen Sitz (12) ermöglicht, und eine eingefahrene Position, in der der Sitz gegen diese Seitenwand (7) geklappt ist, wobei der Sitz mit einem Fuß (13) versehen ist, der an der Unterseite des Sitzes mit Gelenk befestigt ist und dazu bestimmt ist, sich in der Betriebsposition auf den Hauptsitz (10) zu stützen.

2. Anlage zur Datenerfassung insbesondere biometrischer Daten einer Person und insbesondere von Kleinkindern und Babys, nach Anspruch 1, ***dadurch gekennzeichnet, dass*** die Länge des Gelenkfußes (13) auf der Unterseite des Sitzes (12) und die Positionierung der Gelenkachse (14) des Sitzes auf der Seitenwand (7) so ausgelegt sind, dass der Sitz (12) entlang einer horizontalen Ebene positioniert werden kann, damit das Kind stabil sitzt, sobald es sich auf dem Sitz befindet.

3. Anlage zur Datenerfassung insbesondere biometrischer Daten einer Person und insbesondere von Kleinkindern und Babys, nach einem der Ansprüche 1 und 2, ***dadurch gekennzeichnet, dass*** der Sitz (12) außerdem mindestens eine Seitenwand (15, 16) umfasst, über ein Gelenk an einem der seitlichen Ränder dieses Sitzes (12) befestigt, diese Seitenwand oder Seitenwände (15, 16) umfassen zwei Betriebspositionen, eine ausgeklappte Position, in der sie eine Aufnahme bilden, um ein liegendes Baby aufzunehmen und eine Position, in der sie auf die Oberseite des Sitzes (12) geklappt werden.

4. Anlage zur Datenerfassung insbesondere biometrischer Daten einer Person und insbesondere von Kleinkindern und Babys, nach Anspruch 3, ***dadurch gekennzeichnet, dass*** sie außerdem sekundäre Erfassungseinrichtungen (20, 21, 23, 29) für das Gesicht des Benutzers enthält, für den Fall, dass es sich bei diesem um ein auf diesem Sitz (12) liegendes Baby handelt, diese sekundären Erfassungseinrichtungen sind in Höhe der Decke (9) der Anlage angeordnet, senkrecht über dem Sitz.

5. Anlage zur Datenerfassung insbesondere biometrischer Daten einer Person und insbesondere von Kleinkindern und Babys, nach Anspruch 4, ***dadurch gekennzeichnet, dass*** die sekundären Erfassungseinrichtungen (20, 21, 23) so vorgesehen sind, dass wenn sie arbeiten sollen, sie die Haupterfassungseinrichtungen umgehen, die sich jenseits der Zwischenwand befinden, die den Empfangsbereich vom Technikbereich dieser Anlage trennt.

6. Anlage zur Datenerfassung insbesondere biometrischer Daten einer Person und insbesondere von Kleinkindern und Babys, nach einem der Ansprüche 4 und 5, ***dadurch gekennzeichnet, dass*** die sekundären Erfassungseinrichtungen mit sekundären Beleuchtungsvorrichtungen (24) kombiniert sind, die in der Lage sind, ein Baby auszuleuchten, wenn es auf dem Sitz (12) liegt.

7. Anlage zur Datenerfassung insbesondere biometrischer Daten einer Person und insbesondere von Kleinkindern und Babys, nach einem der Ansprüche 5 und 6, ***dadurch gekennzeichnet, dass*** die Decke (9) der Anlage mit Mitteln ausgestattet ist, die den Blick des Babys vor der Erfassung seines Gesichtes auf sich lenken können.

8. Anlage zur Datenerfassung insbesondere biometrischer Daten einer Person und insbesondere von Kleinkindern und Babys, nach Anspruch 7, ***dadurch gekennzeichnet, dass*** die Mitteln um den Blick des Babys anzuziehen, aus der Gruppe ausgewählt werden, zu der mehrere LED (25) unterschiedlicher Farben gehören, die in der Nähe der sekundären Erfassungseinrichtungen (20, 21, 23, 29) angeordnet sind und im Blinkmodus funktionieren, sowie einen Bildschirm mit kleinen Maßen, der in unmittelbarer Nähe der optischen Achse der sekundären Erfassungseinrichtungen angeordnet sind und auf dem eine Animation läuft.

9. Anlage zur Datenerfassung insbesondere biometrischer Daten einer Person und insbesondere von Kleinkindern und Babys, nach einem der Ansprüche 6 bis 8, ***dadurch gekennzeichnet, dass*** sie einen oder mehrere Lautsprecher enthält, die eine Melodie senden, deren Rhythmus mit dem Pulsieren der sekundären Erfassungseinrichtungen (24) synchronisiert ist

10. Anlage zur Datenerfassung insbesondere biometrischer Daten einer Person und insbesondere von Kleinkindern und Babys, nach einem der Ansprüche 3 bis 9, ***dadurch gekennzeichnet, dass*** die Innenseite der Seitenwände (15, 16), die mit Gelenk am Sitz befestigt sind, mit einem Lichtreflektor ausgerüstet ist, zur Minimierung der Schatten durch den Kopf des Babys, um einen gleichförmigen Hintergrund zu gewährleisten, auf dem das Baby während der biometrischen Erfassung liegt.

11. Anlage zur Datenerfassung insbesondere biometrischer Daten einer Person und insbesondere von Kleinkindern und Babys, nach einem der Ansprüche 3 bis 9, ***dadurch gekennzeichnet, dass*** die Oberfläche des Sitzes (12), mit einem flachen Überzug versehen wird, vorteilhafterweise isolierend und lokal verformbar, reflektierend und frei von jeder Körnung um einen gleichmäßigen Hintergrund zu bieten, auf dem das erwähnte Baby während der biometrischen Datenerfassung, vor allem seines Gesichtes, durch die sekundären Erfassungseinrichtungen (20, 21, 23, 29) liegt.

## Claims

1. Installation for acquiring data, in particular biometric data, for a person, and more particularly for young children and babies, including a frame (6, 7, 8) open on at least one of its side faces, comprising means of taking a photograph of the user's face, in addition to means of lighting the said face, and also comprising a main seat (10), intended to receive in a known manner an adult person, **characterized in that** it also includes an additional seat (12), which seat includes a seat section hinging against a side wall (7) of the installation frame capable of being moved into an operational position to place a child on the said additional seat (12), and a retracted position when the seat is folded against the said side wall (7), which seat has a foot (13) hinged on the underside of the said seat and which is designed to bear on the main seat (10) when it is in an operational position.

2. Installation for acquiring data, in particular biometric, for a person, and more particularly for young children and babies according to claim 1, **characterized in that** the length of the hinged foot (13) on the underside of the seat (12) and the positioning of the hinge axis (14) of the seat on the side wall (7) are configured so that the seat (12) takes place in a horizontal plane to obtain the stability for the child once put in position on said seat.

3. Installation for acquiring data, in particular biometric data, for a person, and more particularly for young children and babies according to one of claims 1 and 2, **characterized in that** the seat (12) includes at least one side panel (15, 16) hinged along one of the side edges of the said seat (12), with the said side panel or panels (15, 16) having two operational positions, one folded down, defining an area capable of accommodating a laid down baby, and a position where it is folded back against the upper face of seat (12).

4. Installation for the acquiring of data, in particular biometric, for a person and more particularly for young children and babies according to claim 3, **characterized in that** it also includes secondary means of acquisition (20, 21, 23, 29) of the user's face when the user is a baby, lying down on the seat, with these secondary acquisition means positioned on the ceiling (9) of the installation, vertically flush with the seat.

5. Installation for acquiring data, in particular biometric data, for a person and more particularly for young children and babies according to claim 4, **characterized in that** the secondary means of acquisition (20, 21, 23) are arranged so that, when they are required to operate, they shunt the main acquisition means located beyond the interposed partition separating the reception area of the technical area from the said installation.

6. Installation for acquiring data, in particular biometric data, for a person, and more particularly for young children and babies according to one of claims 4 and 5 **characterized in that** the secondary acquisition means are associated with secondary lighting means (24) capable of lighting the baby's face when it is lying down on the seat (12).

7. Installation for acquiring data, in particular biometric data, for a person, and more particularly for young children and babies according to one of claims 5 and 6, ***characterized in that*** the ceiling (9) of the installation has means capable of catching the eyes of the baby prior to the acquisition of its face.

8. Installation for acquiring data, in particular biometric data, for a person, and more particularly for young children and babies according to claim 7, **characterized in that** the means of catching the eyes of the baby are chosen from a group comprising a multitude of LEDs (25) of varying colors, placed near secondary acquisition means (20, 21, 23, 29) and which are made to flash, and a small size screen placed immediately next to the optical axis of the secondary acquisition means and on which an animated image scrolls.

9. Installation for acquiring data, in particular biometric data, for a person, and more particularly for young children and babies according to one of claims 6 to 8, **characterized in that** it also includes one or several speakers capable of playing a tune, at a rhythm synchronizing with the session of the secondary lighting means (24).

10. Installation for acquiring data, in particular biometric data, for a person, and more particularly for young children and babies according to one of claims 3 to 9, **characterized in that** the inner face of the side walls (15, 16) hinged on the seat is provided with a light reflecting coating designed to minimize the shadows cast onto the baby's head to ensure the uniformity of the background on which the baby's head is resting during the biometric capture process,

11. Installation for acquiring data, in particular biometric data, for a person, and more particularly for young children and babies according to one of claims 3 to 10, **characterized in that** the upper surface of the seat (12) is provided with a plane covering, preferably insulating and locally deformable, of a reflecting type and free of any surface roughness, to ensure the uniformity of the background on which the baby's head is lying during the biometric capture, in particular of face, by the secondary means of acquisition (20, 21, 23, 29).
